# EUROPEAN PATENT APPLICATION

(11) **EP 4 764 081 A1**
(43) Date of publication of application: **24.06.2026**
(21) Application number: 24220952.6
(22) Date of filing: 18.12.2024
(51) Int. Cl.: E01H 5/02, B25G 1/04, A01B 1/02

(54) **A BLADE, A SHAFT, A HANDLE AND A CARBON AVALANCHE RESCUE SHOVEL COMPRISING SAID BLADE, SHAFT AND/OR HANDLE AND A METHOD FOR MANUFACTURING SAID BLADE, SHAFT, HANDLE, AND/OR SHOVEL**

(71) Applicant: PEAKCARBON d.o.o., 3320 Velenje (SI)
(72) Inventor: Meza, Matic, 3320 Velenje (SI)
(74) Representative: Patentni Biro AF d.o.o.

(57) **Abstract**

The present invention belongs to the field of avalanche equipment, more precisely to the field of shovels for removing snow in avalanche rescues or similar situations. The invention relates to a blade, a shaft and a handle for a carbon avalanche shovel, as well as to the carbon avalanche shovel comprising the blade and/or the shaft and/or the handle. The invention also relates to a method for manufacturing said blade, shaft, handle and shovel. The invention is characterized by the fact that all these components are made from or comprise carbon fibers. The invention successfully solves the problem of decreasing the weight of avalanche shovels while maintaining UIAA certification standards. It achieves a weight of approximately 300 g, making it 24% lighter than the lightest currently available UlAA-certified aluminum shovels.

## Description

### Field of the invention

The present invention belongs to the field of avalanche rescue equipment, more precisely to the field of shovels for removing snow in avalanche rescues or similar situations. The invention relates to a blade, a shaft, a handle, and a carbon avalanche rescue shovel comprising said blade and/or shaft and/or handle and a method for manufacturing said blade, shaft, handle, and/or shovel.

### Background of the invention and the technical problem

An avalanche is a rapid flow of snow down a slope, such as a hill or mountain. They can be triggered spontaneously due to increased precipitation or snowpack weakening, or by human or animal activity or earthquakes. Avalanches are mainly composed of flowing snow and air. If people, for example inhabitants, skiers or mountaineers are present in an avalanche, they can get caught in snow, which can be fatal due to suffocation, trauma, or hypothermia. In 2001, a global average of 150 victims per year was reported each year from avalanches (Avalanche Fatalities in IKAR Countries 1976-2001". Utah Avalanche Center, 2006).

Avalanche rescue involves locating and retrieving people who have been buried in avalanche. Chances for successful rescue mission are increased when everyone in a group is carrying and using standard avalanche equipment, among which a beacon, a shovel and a probe is considered the minimum equipment.

Shovels carried by backcountry skiers, ski tourers, mountaineers and rescue squads should be as light as possible, but sufficiently strong and durable to sustain all forces during shoveling. A large strong blade and sturdy handle are important. Plastic traditional snow shovels often break, whereas metal ones are less prone to failure (Genswein and Eide, 2008: V-Shaped Snow Conveyor Belt Approach to Snow Transport). To enable easier carrying, these shovels are collapsible. For this purpose, the shaft is removable from the blade and the shaft is telescopic.

The weight of shovels depends on their size, specifically the size of the blade, length of the shaft and the materials used in their manufacturing. Currently, most used shovels are made from aluminum, such as those produced and sold by companies like Mammut, Black Diamond and Ortovox. Although carbon fiber shovels exist, they do not meet the UIAA safety standards (UIAA 156).

The UIAA safety standard is a globally recognized certification that ensures the quality, reliability, and safety of equipment used in climbing and mountaineering activities. Aluminum-based designs are inherently constrained by the material properties of aluminum, which require additional bulk to meet safety and performance standards. Consequently, these shovels typically weigh between 400 and 820 grams.

The technical problem addressed by this invention is to design a blade, a shaft, a handle as well as a shovel specifically for avalanche rescues, significantly reducing its weight to around 300 grams while maintaining the strength, stiffness, shaft length and blade size required to meet UIAA standards. The aim of the invention is also to provide suitable methods for manufacturing the above-mentioned blade, shaft, handle and shovel.

### Prior art

Patent US6003915A relates to an avalanche shovel used in the rescue and recovery of avalanche victims integrated into a single entity, wherein said shovel comprises in combination:
- a telescoping handle comprised of a plurality of tubular elements capable of expanding to a maximum length greater than seven feet, or a minimum length less than two feet enabling attachment and detachment to a blade or blade;
- a blade or blade having means of interlocking into a selected plurality of tubular elements while not interlocking into the entire said plurality of elements;
- a tip fixed to the innermost element of said handle; and
- a handle fixed to the outermost element of said handle.

The shapes and features of the blade as well as the handle and the handle differ from the present invention.

Document US6003915A, as well as documents US5678873A, US2012047659, US2011304166, and US2009021032 disclose that the blade of the shovel can be made of a lightweight moisture resistant strong material such as aluminum, titanium, lightweight plastic or carbon fiber.

Patent CH697216B1 discloses a shovel with a blade, side walls arranged on both sides, a rear wall and a hollow tube socket adjoining the rear wall for receiving a shovel shaft, wherein the rear wall has a D-handle-like end with a cross part provided as a handle, to which the hollow tube socket is attached. This solution does not address the present technical problem.

Patent EP1785023B1 relates to a collapsible shovel having an elongated shaft, a blade including a front end, a rear end, two sides, and a central region, wherein the rear end includes a recess extending through the blade, wherein the elongated shaft comprises a first end and a second end, wherein the first end is coupled to a handle, and wherein the second end is slidably engaged to the blade by extending through the recess so as to facilitate two independent operational states including an extended state and a collapsed state. The elongated shaft comprises a particular curvature between the first and second ends. This document is silent about the materials used for the shovel in the present invention.

Patent application US20150121728 discloses a dual mode snow shovel with a hoe mode and a shovel mode comprising:
- a blade member including a surface and a recess, and wherein the blade member includes a blade curvature between the surface and the recess;
- a handle including a grip;
- a shaft member including a first end and a second end, wherein the first end is releasably coupled to the blade member via the blade coupler and the second end is fixedly coupled to the handle, and wherein the shaft member includes a shaft curvature in proximity to the first end and a substantially straight region including the second end;
- a hoe mode including configuring the releasable coupling between the first end of the shaft member and the blade member to create a substantially orthogonal orientation of the blade member surface with respect to the shaft member substantially straight region; and
- a shovel mode including configuring the releasable coupling between the first end of the shaft member and the blade member to create a substantially parallel orientation of the blade member surface with respect to the shaft member substantially straight region.

Patent US6357067 describes a multipurpose snow tool for backcountry travel being a modified ice axe having a toothed pick at one end, an adze at the other and a shank therebetween having holes therein large enough to reduce weight without compromising structural integrity. The shank having shock absorbing upper spacers thereabout for insertion into the upper portion of a shaft of varying length depending upon user's physique. Lower spacers surround a combined reversible integrated spike saw held within said shaft, said spacers enclosing a pair of locking buttons supported by leaf springs to secure the spike saw in the lower shaft and to permit easy withdrawal therefrom and reversal for saw use. Furthermore, this solution includes a shovel blade having a sleeve like projection sized to snugly fit around the lower portion of said shaft which is always ready for use when attached while said spike is exposed. Thus, by depressing both buttons simultaneously, the spike saw is removed and reversed. When the spike is in the exposed position, the shovel blade can be quickly attached with a leashed bolt and wing nut.

### Description of the solution to the technical problem

The present invention addresses the technical problem of creating lighter blades, shafts, handles and avalanche shovels that comply with UIAA standards for use in avalanche rescues. The technical problem is solved as defined in the independent claims, wherein the preferred embodiments are defined in the dependent claims.

The avalanche shovel according to the invention comprises a telescopic shaft, which is on one end provided with a blade, and on the other end with a handle. The invention is characterized by the fact that all these components are made from or at least partly comprise carbon fibers.

In one aspect of the invention, a blade for an avalanche shovel is provided. The blade comprises:
- an upper carbon laminate comprising at least one carbon layer, wherein the laminate may comprise several carbon layers or carbon is combined with layer comprising glass, Kevlar, aramid, or other fibers, wherein the laminate has at least 400 g/m² fibers present in the laminate,
- a lower carbon laminate made from at least one carbon layer, an upper carbon laminate comprising at least one carbon layer, wherein the laminate may comprise several carbon layers or carbon is combined with layer comprising glass, Kevlar, aramid, or other fibers, wherein the laminate has at least 400 g/m² fibers present in the laminate,
   wherein said lower and upper carbon laminates are glued together, preferably using epoxy resin,
- an edge on one end of the blade, and
- a central socket arranged to receive one end of the telescopic shaft on the other end, wherein said central socket is in the center of the blade (width-wise).

Both sides are elevated and curved to achieve the blade-like shape.

In preferred embodiments, each carbon laminate is prepared from two layers of carbon, wherein for one layer at least 200 g/m² carbon is used and for the second layer preferably 300 g/m² carbon is used. Usually, the inner layer has a carbon density of 300 g/m² and the outer layers have a carbon density of 200 g/m², but it may be vice versa. The orientation of carbon fibers for the inner layer of the laminate is parallel to the direction of the telescopic handle, i.e. its longitudinal axis, which improves the resilience against bending forces of the blade. In further possible embodiments, the carbon laminate may be topped with an at least one additional layer.

In further possible embodiments, the laminate may comprise one or several carbon layers combined with layer comprising glass, Kevlar, aramid, or other fibers, wherein the laminate has at least 400 g/m² fibers present in the laminate, wherein the given grammage is the sum of fibers forming the laminate, i.e. carbon, glass, Kevlar, aramid, and other fibers. Grammage of 400 g/m² does not thus have to be entirely carbon fibers.

The central socket is shaped using a laminate comprising at least one, preferably two or more, unidirectional carbon layers with fibers of the layers arranged at an angle and the layers of the laminate have a sum grammage of at least 600 g/m² of fibers present in the laminate. In preferred embodiments, three layers of unidirectional carbon layers, preferably of 300 g/m² carbon, are used. The layers forming the laminate for the central socket are placed to surround an aluminum insert placed in between the carbon laminates for the blade, wherein said insert is later removed, once all layers are cured. The central socket ends at approximately 25 to 40%, preferably around 30% of the length of the blade. The angle of the central socket and thus the telescopic handle, once inserted therein, to the blade is from 140° to 160°, preferably around 150°, most preferably 151°. An epoxy filler, selected in the group comprising silica-based, microballoons, carbon powder, glass powder, or microcellulose powder, is added to the sides of the opening to enhance load-bearing capacity by increasing thickness.

The edge of the blade is provided with a stainless-steel plate inserted between both layers of carbon laminate, wherein the stainless-steel plate is provided with a plurality of openings or holes, at least 3, preferably 20 or more, for example up to 500 openings or holes. In most preferred embodiments, said openings or holes are designed as evenly distributed perforations, to allow the layers of carbon to bond efficiently. The mentioned stainless-steel plate is together with both layers of carbon glued with an epoxy resin. The resin enables good binding in the region of the stainless-steel plate through said holes.

The stainless-steel plate ensures a stronger edge that distributes the impact forces to the blade more evenly. Further, a stable edge is ensured, hence efficient penetration into the snow as the edge is not thick. In preferred embodiments, few mm, preferably 2 mm of the carbon is removed, preferably sanded, from the stainless-steel plate, so the plate has the first contact with ice, snow and rock, thus protecting the carbon.

The holes or perforations ensure that upon many impacts the carbon layers do not separate. Separation of the layers could lead to damage of the shovel and hence shorter life span. The stainless-steel plate preferably extends from 0.5 to 2 cm into the blade, while the thickness of the plate is between 0.5 and 1.5 mm.

In preferred embodiments, reinforcement ribs may be provided both right and left of the central socket and may run length-wise towards the edge of the plate, wherein the ribs are curved in the upper part (near the central socket) and approximately straight and parallel to the sides. The ribs extend along the sum of the internal forces generated by the bending forces. The ribs align between the opening for the shaft and the center of the blade, as the internal forces are also aligned in that direction.

These ribs are achieved with geometrical shapes of the carbon layers, wherein the upper layer has ribs and the lower layer has grooves. Such construction is preferred as it enables higher load capacity.

The blade may be provided with arbitrary technical openings, which are known to the skilled person and are not a novel feature.

The upper part of the blade where the central socket is provided may be equipped with a wavy edge to improve stability when the blade is pushed to the snow with a leg.

The length of the blade is in the range from 240 to 250 mm, the width is from 210 to 230 mm, while the blade depth is from 40 to 50 mm. The blade surface is larger than 500 cm².

In the second aspect of the invention, a shaft for an avalanche shovel is provided. The telescopic shaft is formed as a telescopic tube, comprising a first tube and a second tube with a slightly smaller diameter or smaller dimensions to fit into the first tube and to allow extension and retraction of the telescopic second tube. The connections between both tubes and engagement in the extended position is achieved in any suitable manner known to the skilled person.

In the preferred embodiment, the telescopic shaft is made from a 1 mm thick laminate of carbon layers, wherein the direction of carbon fibers is parallel to the longitudinal axis of the shaft as well as perpendicular to the longitudinal axis of the shaft. This ensures that despite all forces the shaft does not break. The telescopic shaft, i.e. the first tube is installed in the central socket of the blade in any known manner known to the skilled person.

In preferred embodiment, the first tube is provided with an additional inner reinforcement insert, which is arranged to cover the surface of the first tube around the open edge of the central socket. The preferred length of the insert is from 1 to 10, most preferably 3 to 5 cm.

The inner reinforcement ring may also be made from carbon in the same manner as both tubes and preferably has the diameter or dimensions as the second tube. Placement of the reinforcement ring in this part ensures that the handle does not break at the edge of the central socket.

In further possible embodiments, the shape of the tubes is oval with extended side walls, which improves stability and load capacity.

The first tube may be provided with an insert to close the tube from the end, which is inserted in the opening of the blade. This insert can be designed in any manner, as long as it closes the tube. The shape, i.e. the cross-section, of the insert corresponds to the shape, i.e. the cross-section, of the first tube. The insert is preferably made from plastic material and can be installed in the end of the tube in any known manner. In preferred embodiment, the insert is glued into the tube to prevent disengagement.

The handle may be designed in any suitable manner known to the skilled person. However, some embodiments are preferred, for example the handle according to a third aspect of the invention. In this case, the handle shaped as a T-like element, with a first part parallel to the telescopic shaft and arranged to be inserted in one end of the telescopic shaft, and a second part perpendicular to the first part (and to the telescopic handle). This handle is also made from layers of carbon, wherein the fiber orientation is the same as for the shaft (longitudinal and transverse). Then, a layer of carbon is placed on one side of the first part, extending over the middle section of the second part and covering the other side of the first part (which is opposite the first side). Fiber orientation in this layer is parallel to the telescopic handle and the first part. As a next step, a second layer of carbon is added which is wrapped around the first part and the fiber orientation is perpendicular to the telescopic shaft and the first part.

The handle may be provided with rivets on two opposite sides as in presently known shovels.

A fourth aspect of the invention is the avalanche shovel comprising the blade and/or the shaft and/or the handle as described above, wherein said shovel is foldable or collapsible, i.e. the shaft is removable from the blade to allow storage or easier carrying of the shovel. The connections between the components, particularly between the blade and the shaft is achieved with spring button clip known to the skilled person. The second tube is inserted in the first tube of the shaft and the connection is locked in the extended position with a spring button clip.

The last aspect of the invention are the methods for manufacturing the blade, the handle and the shaft as described above. The method for manufacturing of the avalanche shovel as described above comprises the following steps:
i. preparing the blade,
ii. preparing the shaft,
iii. preparing the handle,
iv. and final assembly of the prepared blade, shaft and handle, wherein the final assembly comprises:
   - for blade and shaft connection inserting the bottom tube of the shaft into the blade opening and securing it with a spring button clip.
   - for handle and tube connection attaching the handle to the top tube of the shaft using adhesive or mechanical fasteners, ensuring alignment and secure placement.

The steps of preparing the blade, the shaft and the handle will be described in detail below.

The preferred method of preparing the blade comprises the following steps:
a) preparing materials for making the carbon laminate comprising at least one carbon layer, wherein the preferred embodiment comprises preparing 1 layer of 200 ± 110 g/m² plain carbon fiber and 1 layer of 300 ± 100 g/m² unidirectional carbon fiber, oriented longitudinally for each layer,
b) soaking the layers, preferably two carbon layers in epoxy resin,
c) optionally, place peel ply for ensuring a textured surface for optimal bonding on the bonding surface of the wet layers, preferably said carbon layers, before curing,
d) hot press curing, wherein the layers, preferably two carbon layers, with the peel ply are placed into the hot press and cured under temperature in the range from 20 to 100 °C, preferably 50 to 70 °C, and pressure from 2 to 10 bar, preferably 3 to 6 bar, to create rigid top and bottom laminates with a high-strength textured bonding surface without unnecessary air in-between layers, to produce the carbon laminate,
e) surface preparation for bonding, comprising either removal of the peel ply to expose the textured bonding surface ensuring excellent adhesion during the gluing process, if peel ply was used, or alternatively, sanding or sandblasting,
f) assembly of the blade, wherein the cured top and bottom carbon laminates are glued together using epoxy resin, along with the following components:
g) assembly of carbon layers for creating the opening, wherein 3 layers of 300 g/m² (± 100 g/m²) unidirectional (UNI) carbon fiber, oriented at 90° are inserted to form the opening,
h) integrating the perforated stainless-steel plate at the blade's front edge,
i) applying epoxy filler, selected in the group comprising silica-based, microballoons, carbon powder, glass powder, or microcellulose powder, to the sides of the opening to enhance load-bearing capacity by increasing thickness,
j) curing the assembled blade, including the opening and steel plate, in a hot press under controlled temperature in the range from 20 to 100 °C, preferably 50 to 70 °C, and pressure from 2 to 10 bar, preferably 3 to 6 bar, to achieve strong bonding and dimensional precision.

The tubes and the telescopic shaft comprising said tubes are made according to any known manner. The preferred method of preparing the shaft comprises preparation of tubes to be combined in a telescopic shaft, wherein preparation of tubes comprises the following steps:
a) wrapping a mandrel with a chosen carbon fiber layup comprising the following layers in the following order from the innermost to the outermost:
   - one layer of 150 ± 50 g/m² unidirectional carbon fiber at 90° to the tube's longitudinal direction,
   - two layers of 300 ± 100 g/m² unidirectional carbon fiber at 0°
   - one layer of 110 ± 80 g/m² flax fiber for sustainability and 3 layers of 24 ± 10 g/m² glass fiber for surface protection, or 1 layer of 150 ± 50 g/m² plain/twill carbon fiber,
   - optionally, one additional layer of 100 ± 50 g/m² unidirectional carbon fiber at 90°,
b) application of shrink tape to the prepared layers in the previous step to compress the layers, ensuring uniform resin distribution and proper compaction,
c) curing the tube in an oven at 120°C, allowing the shrink tape to compact the layers during the process,
d) removing the mandrel after curing, and
e) trimming the tubes to the desired length and perform surface finishing.

The prepared tubes are joined to form the telescopic shaft as known to the skilled person. The mandrel can have any cross-section or dimension that is desired for the tubes.

The preferred method of preparing the handle comprises the following steps:
a) a removable core material, for example foam or other structural materials is wrapped with the following layup:
   - one layer of 150 ± 50 g/m² unidirectional carbon fiber at 90°,
   - one layer of 150 ± 50 g/m² unidirectional carbon fiber at 0°,
   - at least one layer of unidirectional carbon fiber with a sum grammage of at least 400 g/m², most preferably 600 g/m², for connecting the upper and bottom sections,
   - an additional 300 ± 100 g/m² unidirectional carbon fiber layer wrapped perpendicularly around the connecting layers to prevent splitting under high loads,
   - one layer of 110 ± 80 g/m² flax fiber and one layer of 80 ± 40 g/m² glass fiber, or alternatively, one layer of 160 ± 80 g/m² carbon fiber for outer layers to ensure improved durability,
b) Resin Transfer Molding (RTM) comprising the following steps:
   - placing the wrapped core material into the handle molds,
   - injecting epoxy resin under controlled pressure from 0.5 to 10 bar, preferably from 1.5 to 4 bar to fully impregnate the fibers,
c) curing for 3 to 10 hours at temperature in the range from 40 to 80 °C,
d) after curing, removing the core material to leave a hollow handle structure,
e) trimming and optionally sanding the hollow handle structure for ergonomic precision and surface finish.

The invention successfully solves the problem of decreasing the weight of avalanche shovels while maintaining UIAA certification standards. It achieves a weight of approximately 300 g, making it 24% lighter than the lightest currently available UIAA-certified aluminum shovels.

The invention will be described in further detail based on exemplary embodiments and figures, which show:
- Figure 1: An explosion view of the avalanche shovel according to a possible embodiment
- Figure 2a: A front view of the avalanche shovel according to a possible embodiment
- Figure 2b: A side view of the avalanche shovel according to a possible embodiment
- Figure 3: The stainless-steel plate for the blade according to a possible embodiment
- Figure 4a: A tube for the telescopic shaft according to a possible embodiment
- Figure 4b: The tube of the shaft in cross-section
- Figure 5: The handle for the avalanche shovel according to a possible embodiment

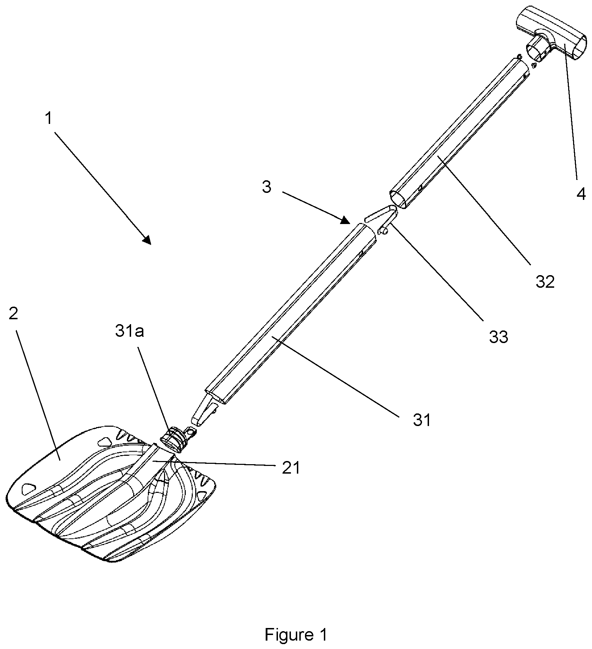

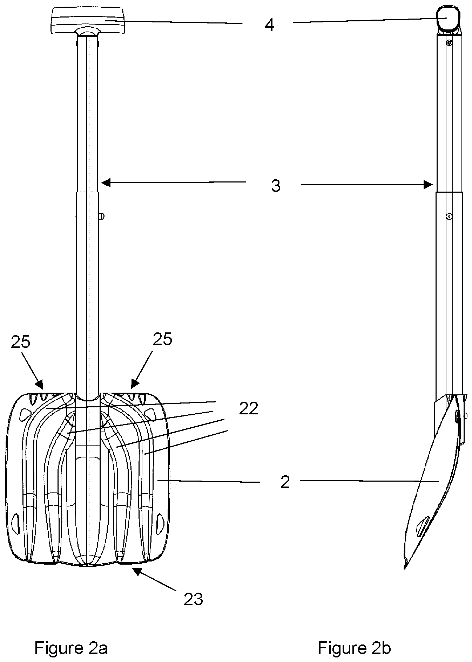

The avalanche shovel 1 according to the invention comprises a telescopic shaft 3, which is on one end provided with a blade 2, and on the other end with a handle 4. Figure 1 shows these components in an explosion view, wherein the blade 2 is approximately rectangularly shaped with a central socket 21 in its upper part arranged to receive the first tube 31 of the telescopic shaft 3. The second tube 32 of the telescopic shaft 3 is partly inserted in the first tube 31 and the connection is achieved with a spring button clip 33. The upper part of the telescopic shaft 3 is arranged to receive the handle 4, which is a hollow shape resembling the letter T. The connection is achieved with rivets or by gluing, for example with epoxy resin. The handle 4 is connected to the shaft 3, wherein the shaft 3 and the blade 2 are removably connected, so that the avalanche shovel 1 has:
- a collapsed (folded) state, in which the blade 2 is not connected to the shaft 3 and the telescopic shaft is in its folded state, and
- an assembled (ready to use) state shown in figures 2a and 2b, in which the shaft 3 is installed in the central socket 21 of the blade 2 and the telescopic shaft 3 is in its extended state.

The blade 2 for an avalanche shovel as shown in figures 2a and 2b comprises:
- an upper carbon laminate comprising at least one carbon layer, wherein the laminate may comprise several carbon layers or carbon is combined with layer comprising glass, Kevlar, aramid or other fibers,
- a lower carbon laminate made from at least one carbon layer, wherein the laminate may comprise several carbon layers or carbon is combined with layer comprising glass, Kevlar, aramid, or other fibers
   wherein said lower and upper carbon laminates are glued together,
- an edge 23 on one end of the blade, and
- a central socket 21 arranged to receive one end of the telescopic shaft 3 on the other end, wherein said central socket 21 is in the center of the blade (width-wise).

Both sides are elevated and curved to achieve the blade-like shape.

Each carbon laminate is prepared from two layers of carbon, wherein for one layer at least 200 g/m² carbon is used and for the second layer preferably 300 g/m² carbon is used. Usually, the inner layer has a carbon density of 300 g/m² and the outer layers have a carbon density of 200 g/m². The orientation of carbon fibers for the inner layer of the laminate is parallel to the longitudinal axis (direction) of the telescopic handle, which improves the resilience against bending forces of the blade.

The central socket 21 is shaped using at least two, preferably three layers of unidirectional 300 g/m² carbon surrounding an aluminum insert placed in between the carbon laminates for the blade, wherein said insert is later removed, once all layers are cured. The central socket 21 ends at around 30% of the length of the blade 2. The angle of the central socket 21 and thus the telescopic shaft 3, once inserted therein, to the blade is 151°. An epoxy filler, selected in the group comprising silica-based, microballoons, carbon powder, glass powder, or microcellulose powder, is added to the sides of the opening to enhance load-bearing capacity by increasing thickness.

The blade 2 is also provided with reinforcement ribs 22 both right and left of the central socket and run length-wise towards the edge of the plate, wherein the ribs 22 are curved in the upper part (near the central socket 21) and approximately straight and parallel to the sides. These ribs 22 are achieved with geometrical shapes of the carbon layers, wherein the upper layer has ribs and the lower layer has grooves.

The upper part of the blade where the central socket 21 is provided with a wavy edge 25 to improve stability when the blade is pushed to the snow with a leg.

The length of the blade 2 is in the range from 240 to 250 mm, the width is from 210 to 230 mm, while the blade depth is from 40 to 50 mm. The blade surface is larger than 500 cm². Some further preferred features of the blade are given in the table below:

| **Feature** | **Specification** | **Purpose** / **Benefit** |
|---|---|---|
| Height of Transition Zone from the socket to the centre of the blade | 30 mm | Increases material volume for better bending resistance and long-term durability. |
| Critical Radiuses | Small: R50 mm (immediate transition from socket to blade), | Manages localized stresses (R50 mm) and ensures smooth stress flow and even load distribution (R1000 mm). |
| | Large: R1000 mm (extends along the blade) | |

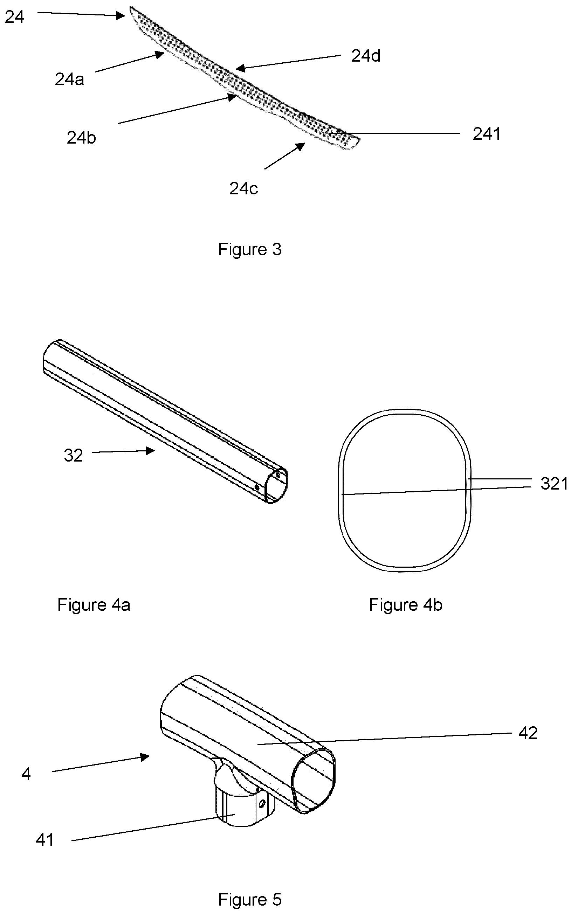

As described above, the edge 23 of the blade 2 is provided with a stainless-steel plate 24 inserted between both layers of carbon laminate. A possible embodiment of the stainless-steel plate 24 is shown in figure 3, wherein the stainless-steel plate 24 is provided with a plurality of openings 241 designed as evenly distributed perforations, to allow the layers of carbon laminate to bond efficiently. The stainless-steel plate 24 preferably extends from 0.5 to 2 cm into the blade, while the thickness of the plate is between 0.5 and 1.5 mm. The geometrical shape of the stainless-steel plate 24 shown in figure 3 is the preferred shape defining an uneven edge with three bulged-parts 24a, 24b, 24c on one longer side facing towards the exterior of the blade 2. The inner edge 24d, which will be located inside the blade is essentially straight or slightly curved.

The shaft 3 for an avalanche shovel comprises a first tube 31 and a second tube 32 with a slightly smaller diameter or smaller dimensions to fit into the first tube 31 and to allow extension and retraction of the telescopic second tube 32. An embodiment of the tube is shown in figure 4a. The connections between both tubes 31, 32 and engagement in the extended position is achieved in any suitable manner known to the skilled person. The telescopic shaft 3 is made from a 1 mm thick laminate of carbon layers, wherein the direction of carbon fibers is parallel to the direction of the shaft 3 as well as perpendicular to the direction of the shaft 3.

The first tube 31 is provided with an additional inner reinforcement insert, which is not visible in the figures. The preferred length of the insert is from 1 to 10, most preferably 3 to 5 cm. The inner reinforcement insert is arranged to cover the surface of the first tube around the open edge of the central socket. The first tube 31 is also provided with a plastic insert (visible in figure 1) to close the tube 31 from the end, which is inserted and glued in the tube 31. The cross-section of the tubes is shown in figure 4b, wherein the tube 32 is oval with extended side walls 321, which improves stability and load capacity. The same is valid for the first tube 31.

The handle 4 according to a possible embodiment is shown in figure 5, wherein the handle is shaped as a T-like element, with a first part 41 parallel to the telescopic shaft and arranged to be inserted in one end of the telescopic shaft 3, and a second part 42 perpendicular to the first part (and to the telescopic handle). The handle 4 is also made from layers of carbon, wherein the fiber orientation is the same as for the shaft (longitudinal and transverse). Then, a layer of carbon is placed on one side of the first part, extending over the middle section of the second part and covering the other side of the first part (which is opposite the first side). Fiber orientation in this layer is parallel to the telescopic handle and the first part. As a next step, a second layer of carbon is added which is wrapped around the first part and the fiber orientation is perpendicular to the telescopic shaft and the first part. The handle is provided with rivets on two opposite sides as in presently known shovels.

The handle, the shaft and the handle separately solve the technical problem, wherein the avalanche shovel comprising said components fulfills UIAA standards.

## Claims

1. A blade (2) for a carbon avalanche rescue shovel (1), wherein the blade (2) comprises:
- an upper carbon laminate comprising at least one carbon layer, wherein the laminate has at least 400 g/m² fibers present in the laminate,
- a lower carbon laminate made from at least one carbon layer, wherein the laminate has at least 400 g/m² fibers present in the laminate,
wherein said lower and upper carbon laminates are glued together, preferably using epoxy resin,
- an edge (23) on one end of the blade (2), wherein said edge (23) is provided with a stainless-steel plate (24) inserted between both carbon laminates, and wherein
∘ the stainless-steel plate (24) is provided with a plurality of openings or holes (241),
∘ the stainless-steel plate (24) extends at least 0.5 cm into the blade (2),
- a central socket (21) arranged to receive one end of a telescopic shaft (3), wherein said central socket (21) is in the center of the blade (2) and wherein the central socket (21) is shaped using a laminate comprising at least one unidirectional carbon layer with fibers of the layers arranged at an angle and the layers of the laminate have a sum grammage of at least 600 g/m² of fibers present in the laminate,
- an epoxy filler, selected in the group comprising silica-based, microballoons, carbon powder, glass powder, or microcellulose powder, provided at the sides of the socket (21), and
- reinforcement ribs (22) provided both right and left of the central socket (21).

2. The blade (2) according to claim 1, wherein the laminate comprises two or more carbon layers or at least one carbon layer is combined with layer comprising glass, Kevlar, aramid, or other fibers.

3. The blade (2) according to claim 1 or 2, wherein each carbon laminate is prepared from two layers of carbon, wherein for one layer at least 200 g/m² carbon is used and for the second layer 300 g/m² carbon is used, and wherein the orientation of carbon fibers for the inner layer of the laminate is transverse to the blade edge (23).

4. The blade (2) according to any of the preceding claims, wherein the stainless-steel plate (24) is provided with at least 3, preferably 20 or more openings or holes (241), wherein most preferably said openings or holes (241) are designed as evenly distributed perforations.

5. The blade (2) according to any of the preceding claims, wherein the stainless-steel plate (24) extends from 0.5 to 2 cm into the blade, while the thickness of the plate (24) is between 0.5 and 1.5 mm.

6. The blade (2) according to any of the preceding claims, wherein the reinforcement ribs (22) are achieved with geometrical shapes of the carbon layers, wherein the upper layer has ribs and the lower layer has grooves and the reinforcement ribs are curved in the upper part near the central socket (21) and approximately straight and parallel to blade sides.

7. A shaft (3) for a carbon avalanche rescue shovel (1), wherein the shaft (3) is formed as a telescopic tube, comprising a first tube (31) and a second tube (32) with a slightly smaller diameter or smaller dimensions to fit into the first tube (31) and to allow extension and retraction of the telescopic second tube (32), wherein the telescopic shaft (3) is made from a 1 mm thick laminate of carbon layers, wherein the direction of carbon fibers is parallel to a longitudinal axis of the shaft (3) as well as perpendicular to the longitudinal of the shaft (3).

8. The shaft (3) according to claim 7, wherein the first tube is provided with an additional inner reinforcement insert, which is arranged to cover the surface of the first tube (31) around the open edge of the central socket (21), and wherein the preferred length of the insert is from 1 to 10, most preferably 3 to 5 cm.

9. The shaft according to any claim from 7 to 8, wherein the shape of the tubes is oval with extended side walls (321).

10. A handle (4) for a carbon avalanche rescue shovel (1), wherein the handle is shaped as a T-like element, with a first part (41) parallel to the telescopic shaft and arranged to be inserted in one end of the telescopic shaft, and a second part (42) perpendicular to the first part, and wherein
- the second part (42) of the handle (4) is made from layers of carbon, wherein the fiber orientation is longitudinal and transverse,
- a layer of carbon on one side of the first part, extending over the middle section of the second part and covering the other side of the first part opposite the first side and
- a second layer of carbon is added which is wrapped around the first part and the fiber orientation is perpendicular to the telescopic shaft and the first part.

11. A carbon avalanche rescue shovel (1) comprising the blade (2) and/or the shaft (3) and/or the handle (4) according to any of the preceding claims, wherein the handle (4) and the shaft (3) with the blade (2) are removably connected, so that the shovel (1) has:
- a collapsed state, in which the blade (2) is not connected to the shaft (3) and the telescopic shaft (3) is in its folded state, and
- an assembled state, in which the shaft (3) is installed in the central socket (21) of the blade (2) and the telescopic shaft (3) is in its extended state.

12. A method for manufacturing the blade (2) according to any claim from 1 to 6, wherein said method comprises the following steps:
a) preparing materials for making the carbon laminate comprising at least one carbon layer, wherein the laminate has at least 400 g/m² fibers present in the laminate,
b) soaking the layers of the laminate in epoxy resin,
c) optionally, placing peel ply for ensuring a textured surface for optimal bonding on the bonding surface of the wet layers, preferably said carbon layers, before curing,
d) hot press curing, wherein the layers, preferably two carbon layers, with the peel ply are placed into the hot press and cured under temperature in the range from 20 to 100 °C, preferably 50 to 70 °C, and pressure from 2 to 10 bar, preferably 3 to 6 bar, to create rigid top and bottom laminates with a high-strength textured bonding surface without unnecessary air in-between layers, to produce the carbon laminate,
e) surface preparation for bonding, comprising either removal of the peel ply to expose the textured bonding surface ensuring excellent adhesion during the gluing process, if peel ply was used, or alternatively, sanding or sandblasting,
f) assembly of the blade, wherein the cured top and bottom carbon laminates are glued together using epoxy resin, along with the following components:
g) assembly of carbon layers for forming the socket, wherein a laminate comprising at least one unidirectional carbon layers with fibers of the layers arranged at an angle and the layers have a sum grammage of at least 600 g/m² of fibers present in the laminate is used,
h) integrating the perforated stainless-steel plate at the blade's front edge,
i) applying epoxy filler, selected in the group comprising silica-based, microballoons, carbon powder, glass powder, or microcellulose powder, to the sides of the opening to enhance load-bearing capacity by increasing thickness,
j) curing the assembled blade, including the opening and steel plate, in a hot press under controlled temperature in the range from 20 to 100 °C, preferably 50 to 70 °C, and pressure from 2 to 10 bar, preferably 3 to 6 bar, to achieve strong bonding and dimensional precision.

13. A method for manufacturing the handle (4) according to claim 11, wherein said method comprises the following steps:
a) a removable core material, for example foam or other structural materials is wrapped with the following layup:
- one layer of 150 ± 50 g/m² unidirectional carbon fiber at 90°,
- one layer of 150 ± 50 g/m² unidirectional carbon fiber at 0°,
- at least one layer of unidirectional carbon fiber with a sum grammage of at least 400 g/m², most preferably 600 g/m²,
- an additional 300 ± 100 g/m² unidirectional carbon fiber layer wrapped perpendicularly around the connecting layers to prevent splitting under high loads,
- one layer of 110 ± 80 g/m² flax fiber and 1 layer of 80 ± 40 g/m² glass fiber, or alternatively, 1 layer of 160 ± 80 g/m² carbon, glass, Kevlar, aramid or any other fiber for outer layers to ensure improved durability,
b) Resin Transfer Molding (RTM) comprising the following steps:
- placing the wrapped core material into the handle molds,
- injecting or infusing epoxy resin under controlled pressure or under pressure from 0.5 to 10 bar, preferably from 1.5 to 4 bar to fully impregnate the fibers,
c) curing for 3 to 10 hours at temperature in the range from 40 to 80 °C,
d) after curing, removing the core material to leave a hollow handle structure,
e) Trimming and optionally sanding the hollow handle structure for ergonomic precision and surface finish.

14. A method for manufacturing said shovel the avalanche shovel according to claim X, wherein said method comprises the following steps:
i. preparing the blade (2) according to claim 13, and/or
ii. preparing the shaft (3), and/or
iii. preparing the handle (4) according to claim 14, and/or
iv. and final assembly of the blade (2), shaft (3), and handle (4), wherein the final assembly comprises:
- for blade (2) and shaft (3) connection inserting the bottom tube of the shaft into the central socket (21) and securing it with a spring button clip,
- for handle (4) and the tube (32) connection attaching the handle to the top tube (32) of the shaft (3) using adhesive or mechanical fasteners, ensuring alignment and secure placement.
